# EUROPEAN PATENT SPECIFICATION

(11) **EP 0 431 178 B1**
(45) Date of publication and mention of the grant of the patent: **10.05.1995**
(21) Application number: 90908621.7
(22) Date of filing: 01.06.1990
(51) Int. Cl.: H02K 21/22

(54) **SYNCHRONOUS MACHINE**
SYNCHRONMASCHINE
MACHINE SYNCHRONE

(30) Priority: 01.06.1989 JP 137414/89
(43) Date of publication of application: 12.06.1991
(73) Proprietor: Nakano, Kazuo, Setagaya-ku Tokyo (JP)
(72) Inventor: Nakano, Kazuo, Setagaya-ku Tokyo (JP)
(74) Representative: Price, Paul Anthony King
(86) International application number: JP9000713
(87) International publication number: WO9015467

(56) References cited:
- EP-A- 0 291 219
- EP-A- 0 295 718
- EP-A- 0 375 228
- DE-A- 1 613 442
- JP-A- 5 944 957
- JP-A-59 220 061
- US-A- 4 782 259
- PATENT ABSTRACTS OF JAPAN vol. 13, no. 184 (E-751)(3532) 28 April 1989 ; & JP-A-188 53
- PATENT ABSTRACTS OF JAPAN vol. 11, no. 92 (E-491)(2539) 24 March 1987 ; & JP-A-61 244 249

## Description

The present invention relates to a synchronous machine which can either take out electric power or create torque by rotating a field which is provided by magnetized permanent magnets relatively to a coil-wound armature.

The conventional direct current generators, direct current motors, synchronous generators and synchronous motors may be classified into two large groups of an armature-rotating type and a field-rotating type, and those in which permanent magnets are used in many cases belong to the latter type. In any of the above the number of magnetic poles of the field and the number of armature poles are in an integral ratio such as 1 : 1, or 1 : 2. Also, the permanent magnets as the field poles are magnetized orthogonally against the armature coils, and rotate by themselves. In order to bring the magnetic field in the vicinity of the magnetic poles close to a desired value, some consideration is given usually to the shape of the magnetic poles, air gap, etc.

For instance, in the conventional direct current generators or synchronous generators, since the permanent magnets as the field poles are magnetized orthogonally against the direction of the relative rotation of the armature, the greatest attractive force is created when the magnetic poles and the armature poles face each other directly, but, on the other hand, in the valley between the magnetic poles, since the attractive force suddenly decreases, strong cogging of the rotation of the armature occurs. It is disadvantageous that the rotation of the armature cannot be smoothly performed, requiring a strong rotating torque for overcoming the cogging.

EP-A-0,291,219 discloses a motor having an armature with n salient poles disposed around a central axis. The rotor comprises (n-1) permanent magnets arranged circumferentially around the n salient poles. Each permanent magnet is magnetized radially so as to have north and south poles.

The object of the present invention is to provide a synchronous generator or a synchronous motor which reduces the problem of cogging.

According to the present invention, there is provided a synchronous machine comprising an armature structure and a field structure, wherein said armature and field structures are rotatable relative to each other around an axis of rotation, said armature structure has a plurality of salient poles arranged around said axis of rotation and a plurality of windings wound on said salient poles, said windings are connected to each other to form an armature winding configuration, said field structure includes a plurality of permanent magnets arranged circumferentially around said axis of rotation and around said salient poles of said armature structure, the number of said salient poles of said armature structure is n, n being an integer, and the number of said permanent magnets is (n-1), characterized in that: said permanent magnets are magnetized so that each of said permanent magnets has a north pole at one circumferential end and a south pole at the other circumferential end, the adjacent circumferential ends of each adjacent pair of said magnets are of opposite polarity to each other, and said permanent magnets are arranged so that the boundary between said adjacent circumferential ends of each adjacent pair of said permanent magnets extends in a spiral direction along and around said axis of rotation.

The present invention provides circumferential magnetization of the permanent magnets. Also, the boundary between adjacent circumferential ends of the permanent magnets (i.e. the boundary between a north pole and a south pole of adjacent permanent magnets) is arranged so as to extend in a spiral direction along and around the axis of rotation. This skew of the boundary means that the magnetic force, between a passing salient pole of the armature structure and the poles of the permanent magnets at the boundary, varies gradually as the salient pole passes the boundary.

A non-limiting embodiment of the present invention will now be described with reference to the accompanying drawings, in which:-
Fig. 1 is a sectional view of a rotating-field type generator in accordance with the present invention;
Fig. 2 is a front view of an armature core of the generator;
Fig. 3 shows the armature core when wound with windings;
Fig. 4 is a front view of the permanent magnets of the generator;
Fig. 5 is a partially developed view of the magnets;
Fig. 6 is a circuit diagram for the generator; and
Fig. 7 is a graph showing the generated voltages, currents, and torques against the load at varying rotational speeds.

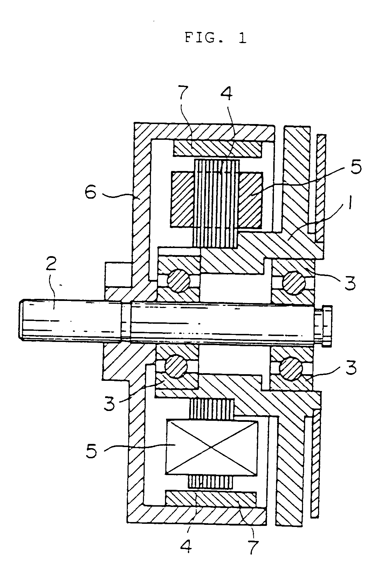

As shown in Fig. 1, a hollow fixed shaft 1 contains a rotating shaft 2 which is rotatably supported by a bearing 3.

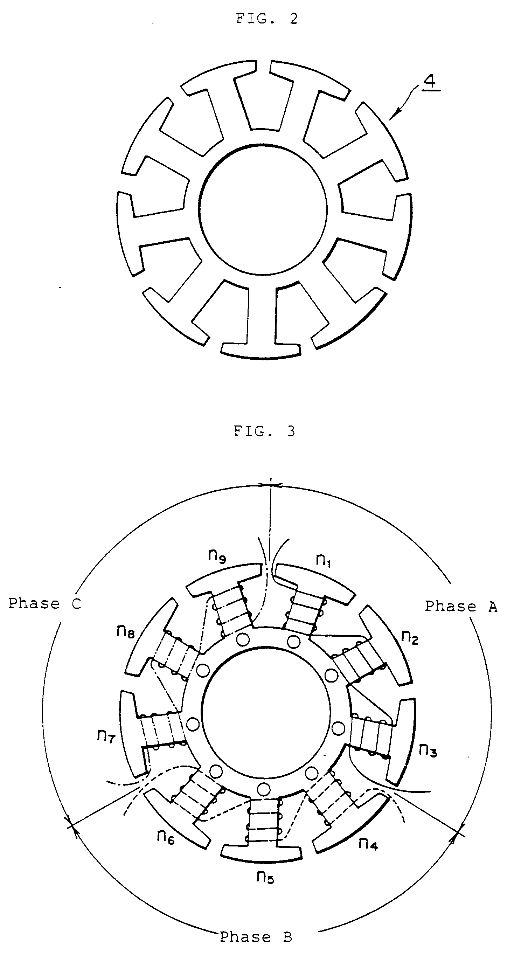

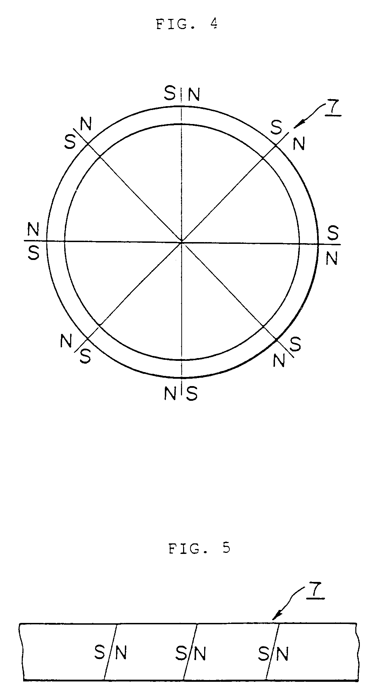

On the fixed shaft 1 is fixed an armature core 4 having 9 poles (n = 9 in this example) formed thereon as shown in Fig. 2, each of said poles n₁ - n₉ being coil-wound. Fig. 3 illustrates the winding method for an odd number of poles. The winding and connecting wires in phase A are represented with a solid line, those in phase B with a dash line, and those in phase C with a dot-dash line. As one phase is formed using three poles, the 9 poles n₁ - n₉ provide 3 phases. In the sectional view in Fig. 1, armature coils are represented by 5.

In order that a field may be formed by the rotating frame 6 secured on the rotating shaft 2, a plurality of permanent magnets 7 are fixed so as to be positioned adjacent to the periphery of the poles of the aforementioned armature core 4.

The permanent magnets 7 are arranged in such a way that the N and S poles are positioned alternately on the inner surface as shown in Figs. 4 and 5, and have ends skewed relative to the center line, as shown in Fig. 5.

The number of poles of the permanent magnets 7 is 2(n-1)=2(9-1)=16, and accordingly a 16-poled field is formed. Only one pair of poles of the permanent magnets faces the poles n₁ - n₉ of the armature core 4 at a particular time.

Because of the skewed ends of the permanent magnets 7, the substantial attractive force created between one of the poles n₁ - n₉ and a passing pole pair of the permanent magnets 7 varies gradually as the pole pair passes by.

When, for example, the S pole of a certain permanent magnet 7 constituting the field has passed by the position of, for example, n₁ in Fig. 3, and the attractive force between the paired poles is weakened, the repulsive force is increasingly created between the next position n₂ and another pole, which is an N pole, of the permanent magnet 7, so that the decrease in the substantial attractive force can be offset.

Thus, this gives such a relationship as close to the case where a pair of poles face each other directly, and therefore the variation of the cogging torque due to the sudden changes in the attractive force of the armature pole 4 caused by the pole of the permanent magnet 7 constituting the field is very little.

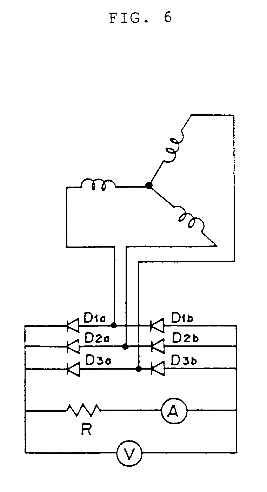

Also, as shown in the circuit diagram in Fig. 6, coils 5 are connected together at each one end, forming a Y-connection.

The other ends of said coils are connected respectively with the intermediate point between two diodes, i.e., D₁ₐ and D_{1b}, D₂ₐ and D_{2b}, and D₃ₐ and D_{3b}, said D₁ₐ, D₂ₐ and D₃ₐ and said D_{1b}, D_{2b} and D_{3b} being respectively combined and connected through a common line, and a load R is connected with the common line.

Thus, there is obtained a direct current generator, in which only a unidirectional current can flow through said load R.

Further, as described above the skew of the poles of the permanent magnets constituting the field reduces the variation in the magnetic flux density produced at the armature poles 4 before and after they face the magnetic poles. Thus, the electric current generated in coils 5 is found to be almost flat, and as the result the ripple voltage involved therein can also be reduced.

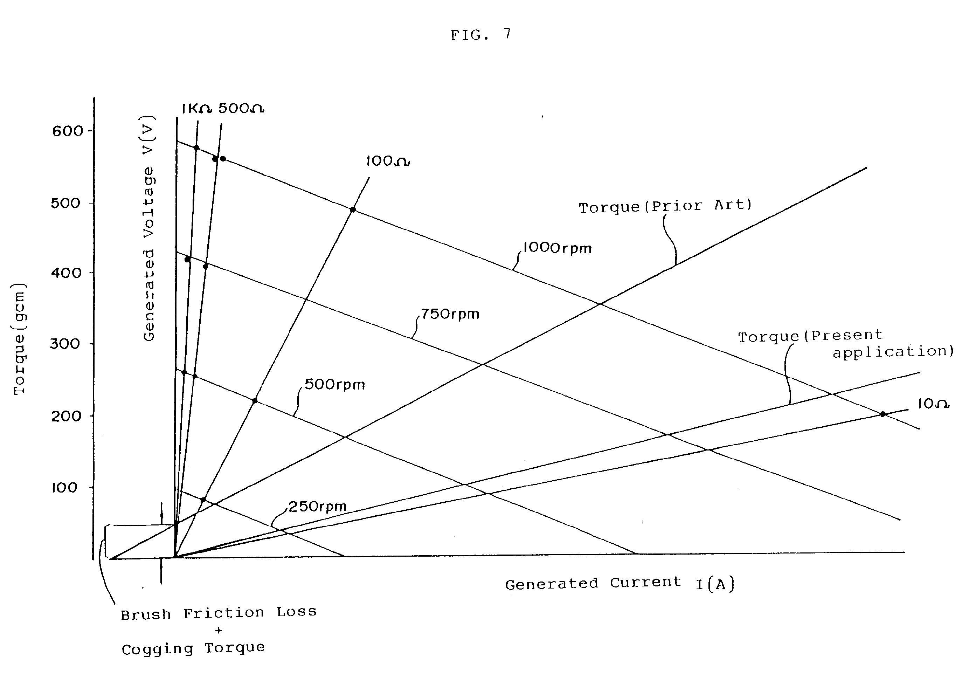

Fig. 7 shows the generated voltages, currents, and rotating torques corresponding to the number of rotations of the rotating shaft 2 at the time when a voltmeter V and an ammeter A are connected to this generator as shown in Fig. 6, with the load resistance R at 0, 10, 100, 470, 1000 and infinite ohms.

Meanwhile, in the present experiment there are employed an armature core 4 of 39.4 mm in outer diameter, permanent magnets 7 of 40 mm in inner diameter, which constitute the field, coils 5 of 140 turns of 0.16 mm insulated copper wire, and a coil-wound resistance of 9.3 ohms.

Furthermore, the object which rotates (the rotor) may be the armature on the inside instead of the permanent magnets 7 on the outer side which constitute the field, in which case conventional brushing means may be adopted in taking out the electric power.

Although the above explanation has been given solely of a generator, since generators and motors have essentially the same mechanism, it is needless to say that the same may also be applied to motors.

By making the direction of magnetization of the plurality of permanent magnets coincide with the direction of rotation of the field magnets or the armature, and by inclining the magnetized poles of the plurality of permanent magnets relative to the axis of the aforementioned rotary motion, the NS magnetic path can be elongated and the magnetic field distribution between N and S can be broadened. At the position between an N pole and the neighbouring S pole, the cogging torque is reduced since the attractive force of the N pole and the repulsive force of the S pole offset each other. Furthermore, because the number of armature poles is n, and the number of permanent magnets which constitute the field is n - 1, only one armature pole and one pole pair of the permanent magnets can face each other at a particular time, and this also contributes to the reduction of the cogging torque.

If a static induction transistor (SIT) or the like, which shows little loss, is used as a rectifier element, there will be further reduced cogging loss. Since permanent magnets are used, excitation current loss is also nil.

On the other hand, as the magnetic field flux density crossing the armature coil is broadened as well as flattened at its peak area, the wave form becomes almost trapezoidal, so that when the current is converted into a direct current through diodes the conversion efficiency is excellent.

Thus, the synchronous machine is excellent not only in that both the mechanical and electrical energy losses are very little but also in that it can supply a large output with a small input.

## Claims

1. A synchronous machine comprising an armature structure (4) and a field structure (7), wherein said armature and field structures are rotatable relative to each other around an axis of rotation, said armature structure has a plurality of salient poles (n₁-n₉) arranged around said axis of rotation and a plurality of windings (5) wound on said salient poles, said windings are connected to each other to form an armature winding configuration, said field structure includes a plurality of permanent magnets (7) arranged circumferentially around said axis of rotation and around said salient poles of said armature structure, the number of said salient poles of said armature structure is n, n being an integer, and the number of said permanent magnets is (n-1), characterized in that:
said permanent magnets (7) are magnetized so that each of said permanent magnets has a north pole at one circumferential end and a south pole at the other circumferential end,
the adjacent circumferential ends of each adjacent pair of said magnets (7) are of opposite polarity to each other, and
said permanent magnets are arranged so that the boundary between said adjacent circumferential ends of each adjacent pair of said permanent magnets extends in a spiral direction along and around said axis of rotation.

2. A synchronous machine according to claim 1, wherein the number of said salient poles (n₁-n₉) is nine and the number of said permanent magnets (7) is eight.

3. A synchronous machine according to claim 2, wherein the number of said windings (5) is three and each of said windings is wound on a respective group of three of said salient poles (n₁-n₉).

4. A synchronous machine according to any one of claims 1 to 3, wherein said field structure (7) is fixed to a rotatable shaft (2).

5. A synchronous motor comprising a synchronous machine according to any one of claims 1 to 4.

6. A synchronous generator comprising a synchronous machine according to any one of claims 1 to 4.

## Patentansprüche

1. Synchronmaschine mit einem Ankeraufbau (4) und einem Feidaufbau (7), wobei die Anker- und Feldaufbauten relativ zueinander um eine Drehachse drehbar sind, der Ankeraufbau eine Mehrzahl von auskragenden Polen (n₁-n₉) hat, die um die Drehachse herum angeordnet sind, sowie eine Mehrzahl von Wicklungen (5) hat, die auf die auskragenden Pole gewickelt sind, wobei die Wicklungen miteinander so verbunden sind, daß sie einen Ankerwicklungsaufbau bilden, der Feldaufbau eine Mehrzahl von Dauermagneten (7) aufweist, die in Umfangsrichtung um die Drehachse herum und um die auskragenden Pole des Ankeraufbaues herum angeordnet sind, wobei die Zahl der auskragenden Pole des Ankeraufbaues n ist, wobei n eine ganze Zahl ist, und die Zahl der Dauermagnete (n-1) ist, dadurch gekennzeichnet, daß
die Dauermagnete (7) derart magnetisiert sind, daß jeder der Dauermagnete an einem Umfangsende einen Nordpol und an dem anderen Umfangsende einen Südpol hat,
wobei die benachbarten Umfangsenden jedes benachbarten Paares derartiger Magnete (7) relativ zueinander von entgegengesetzter Polarität sind, und
daß die Dauermagnete derart angeordnet sind, daß die Grenzfläche zwischen den benachbarten Enden in Umfangsrichtung jedes benachbarten Paares der Dauermagnete sich in einer spiraligen Richtung entlang der Drehachse und um die Drehachse herum erstreckt.

2. Synchronmaschine nach Anspruch 1, wobei die Zahl der auskragenden Pole (n₁-n₉) neun ist und die Zahl der Dauermagnete (7) acht beträgt.

3. Synchronmaschine nach Anspruch 2, wobei die Zahl der Wicklungen (5) drei beträgt und wobei jede der Wicklungen auf eine entsprechende Gruppe von dreien der auskragenden Pole (n₁-n₉) gewickelt ist.

4. Synchronmaschine nach einem der Ansprüche 1 bis 3, wobei der Feldaufbau (7) an einer drehbaren Welle (2) befestigt ist.

5. Synchronmotor, dadurch gekennzeichnet, daß er eine Synchronmaschine nach einem der Ansprüche 1 bis 4 aufweist.

6. Synchrongenerator, dadurch gekennzeichnet, daß er eine Synchronmaschine nach einem der Ansprüche 1 bis 4 aufweist.

## Revendications

1. Machine synchrone comprenant une structure d'armature (4) et une structure de champ (7), dans laquelle lesdites structures d'armature et de champ sont mobiles en rotation l'une par rapport à l'autre autour d'un axe de rotation, ladite structure d'armature comporte plusieurs pôles saillants (n₁ à n₉) agencés autour dudit axe de rotation et plusieurs enroulements (5) bobinés sur lesdits pôles saillants, lesdits enroulements sont connectés les uns aux autres pour former une conformation d'enroulement d'armature, ladite structure de champ comprend plusieurs aimants permanents (7) disposés de façon circonférentielle autour dudit axe de rotation et autour desdits pôles saillants de ladite structure d'armature, le nombre desdits pôles saillants de ladite structure d'armature est n, n étant un nombre entier, et le nombre desdits aimants permanents est (n-1), caractérisé en ce que :
lesdits aimants permanents (7) sont aimantés de telle façon que chacun desdits aimants permanents ait un pôle nord à une extrémité circonférentielle et un pôle sud à l'autre extrémité circonférentielle ;
en ce que les extrémités circonférentielles adjacentes de chaque paire adjacente desdits aimants (7) sont de polarités opposées les unes aux autres ; et
en ce que lesdits aimants permanents sont agencés de telle façon que la frontière entre lesdites extrémités circonférentielles adjacentes de chaque paire adjacente desdits aimants permanents s'étende suivant une direction en spirale le long et autour dudit axe de rotation.

2. Machine synchrone selon la revendication 1, dans laquelle le nombre desdits pôles saillants (n₁ à n₉) est de neuf et le nombre desdits aimants permanents (7) est de huit.

3. Machine synchrone selon la revendication 2, dans laquelle le nombre desdits enroulements (5) est de trois et chacun desdits enroulements est bobiné sur un groupe respectif de trois desdits pôles saillants (n₁ à n₉).

4. Machine synchrone selon l'une quelconque des revendications 1 à 3, dans laquelle ladite structure de champ (7) est fixée à un arbre mobile en rotation (2).

5. Moteur synchrone comprenant une machine synchrone selon l'une quelconque des revendications 1 à 4.

6. Générateur synchrone comprenant une machine synchrone selon l'une quelconque des revendications 1 à 4.
